# EUROPEAN PATENT APPLICATION

(11) **EP 1 098 246 A1**
(43) Date of publication of application: **09.05.2001**
(21) Application number: 99402721.7
(22) Date of filing: 02.11.1999
(51) Int. Cl.: G06F 9/44

(54) **Displaying graphical objects**

(71) Applicant: CANAL+ Société Anonyme, 75711 Paris Cedex 15 (FR)
(72) Inventor: Jouet, Bruno c/o Canal+ Techn. Societé Anonyme, 75516 Paris Cedex 15 (FR); Villers, Jean-Stéphane, 95800 Cergy (FR)
(74) Representative: Cozens, Paul Dennis

(57) **Abstract**

An object, such as a widget, in a graphical user interface comprises an instance of a widget class in which is defined properties and/or methods which control operation of the object; and an associated instance of a look object class in which is defined properties and/or methods which control the look of the object. Responsibility for displaying the widget is given to methods of the look object class. Therefore, the appearance of the widget is determined by the look object class. Object-oriented programming techniques can be used to provide a plurality of look object classes derived from a common base class.

## Description

The present invention relates to a method of controlling the appearance of a graphical object in a graphical user interface. The invention has a particular, but not exclusive, application in providing a graphical user interface for appliances such as receiver/decoders for digital television signals. However, the invention also has application to general purpose computers.

Most graphical user interfaces (GUIs) include a similar set of basic components that can be manipulated by a user. These include such objects as push-buttons, sliders, list boxes, and so forth. Such components are referred to generically as "widgets". Although the basic function of widgets is common amongst many GUIs, the appearance of the widgets differs from one GUI to another.

Some graphical operating systems, the X window system for example, impose few constraints upon the appearance of widgets that can be displayed in the GUI. This allows programmers to develop applications using a number of different widget sets, each of which has its own distinctive appearance. Moreover, a large number of window managers run under X which influence the overall appearance of windows created by applications. Normally, it is possible to exercise some control over the appearance of an application as displayed on the GUI both during development of the application and to some extent at run time. However, the appearance is, in both cases, determined by hard coded parts of the widget set or the window manager. It is not possible for a user to change significantly the look of an application without re-coding the widget set, the window manager, or both. Either of these options requires a large amount of re-coding work and a large amount of new code to be installed on a host system.

One proposal to reduce the amount of re-coding work that must be done in order to update a look is to build elements (for example, corners, borders, and so forth) of a window in a GUI display from pixel maps stored in memory of a host system. This may be provided as an independent aspect of the invention. However, the pixel maps can occupy a significant amount of memory when in use, and represent a large amount of data to be transferred when the look is to be updated. This can be a significant disadvantage if the GUI must operate with limited resources and must be updated over a link of limited bandwidth. One example of such a situation arises when an application is executed on a receiver/decoder for digital television signals. Such a decoder has a limited amount of memory as compared with a general purpose computer, and the software (including the look of the GUI) is updated by downloading data from a channel which forms part of the received television signal.

An aim of this invention is to provide an application developer with the ability to control the appearance of an application in a consistent and readily controllable manner, with a minimum of re-coding being necessary, and with a minimum of data required to be transferred to an execution environment.

In a first aspect of the present invention there is provided a method of controlling the appearance of a graphical object in a graphical user interface, comprising
defining a look object; and
associating the look object with the graphical object.

By explicitly defining a look object, rather than embedding code which controls appearance in an application, the invention may allow greater flexibility than hitherto in the way in which the appearance of a graphical object is controlled.

Preferably the look object includes code or parameters determining how the graphical object is displayed, such code or parameters preferably being stored in memory. For example, the look object may be defined by object-oriented program code.

The look object may be defined by instantiating a look object class. A look object which is defined in this way may contain a pointer to another look object class (other than that from which it is derived). This can allow the look object to access attributes and/or methods of that other look class. In this way, a look object can take its characteristics from two or more other looks, which can allow a look to be created which is the union of two different looks, or allow extra characteristics to be added to the look.

In order to associate the graphical object with the look object, the graphical object may include an attribute identifying the look object associated with the graphical object.

Preferably, the look object defines actual colours which are assigned to specific named colours. For example, the look object may define the actual colours which are assigned to at least one of black, white and one or several shades of grey. In this way, the look can define a certain colour scheme, for example, by giving a certain hue to graphical objects associated with that look. The look object may also define a colour map which sets the actual colour values which are to be used when displaying any particular colour.

In order to change the appearance of the graphical object, either the look object may be re-defined or modified (for example by changing the code or parameters at compile time, or the parameters at run time), or a different look object may be associated with the graphical object. The method may therefore further comprise modifying the appearance of the graphical object by re-defining or modifying the look object or by associating a different look object with the graphical object.

If a look object is re-defined or modified, then it may be necessary to update the appearance of graphical objects which are associated with that look object. In order to achieve this, the look object may include an update counter whose value is updated when the look object is re-defined or modified.

Preferably, graphical objects store the value of the update counter of the look object which they have affected. Each time a graphical object is to be redisplayed, the value stored by the graphical object is compared with the value of the update counter of the look object. If the two are different, the graphical object takes into account the modifications in the look object, and stores the new value of the update counter.

The look object may include a validation mask which indicates methods that can be called by the look object, so that methods which are not implemented by the look object are not called. The graphical object can access the validation mask of the look object to optimise the drawing of the graphical object. In this way, calls to methods which are not implemented can be avoided, which can speed up the drawing of the graphical object.

In some circumstances, for example when a look object is first created, the look object may be associated with a single graphical object. However, in preferred embodiments, the look object is associated with a plurality of graphical objects. By associating the look object with a plurality of graphical objects, a uniform appearance for those objects may be achieved, and the amount of data required for defining the look object may be reduced, in comparison to the case where each graphical object has its appearance defined independently.

Thus, the method may be a method of controlling the appearance of a plurality of graphical objects in a graphical user interface, and may comprise associating the look object with the plurality of graphical objects.

In certain situations, such as where no graphical objects are associated with a look object, it may be desirable to delete the look object, for example to enable the memory space used by the look object to be re-allocated. This may be particularly important in devices such as receiver/decoders where memory may be limited. For this purpose (amongst others) the look object may include a counter which indicates the number of graphical objects which are associated with that look object. Preferably, each time a graphical object is associated with the look object, the counter is incremented, and each time a graphical object is disassociated with the look object, the counter is decremented. If the counter is at zero, then it may be assumed that the look object can be safely deleted.

In another method aspect of the invention, there is provided a method of defining a graphical object in a graphical user interface, comprising providing a look object which controls the appearance of the graphical object (for example, by defining properties and/or methods which control the appearance of the graphical object), and providing a widget object which controls operation of the graphical object (for example, by defining properties and/or methods which control the operation of the graphical object). Any of the features mentioned above may be provided in combination with this aspect.

Any of the methods described above preferably further comprise displaying the graphical object, for example on a screen such as a computer screen or a television screen.

Any of the methods described above may be carried out by a receiver/decoder, such as a digital or analogue television receiver/decoder.

The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

In an apparatus aspect of the invention there is provided apparatus for controlling the appearance of a graphical object in a graphical user interface, comprising:
means for defining a look object, for example by creating or modifying code or parameters in memory determining how a graphical object will be displayed; and
means for associating the look object with the graphical object, for example by setting an attribute of the graphical object to identify the look object.

Preferably the apparatus includes a suitably programmed processor for defining the look object and for associating the look object with the graphical object, and memory for storing the look object and the graphical object. The look object may be defined by object-oriented program code. The look object may be defined by instantiating a look object class. The look object may contain a pointer to another look object class.

The apparatus may be adapted to modify the appearance of the graphical object, by re-defining or modifying the look object, or by associating a different look object with the graphical object. The look object may include an update counter (such as a location in memory) whose value is updated when the look object is re-defined or modified.

The look object may include a validation mask (for example, stored in memory) which indicates methods that can be called by the look object.

The apparatus may be apparatus for controlling the appearance of a plurality of graphical objects in a graphical user interface, and may be adapted to associate the look object with a plurality of graphical objects. The look object may include a counter (such as a location in memory) which indicates the number of graphical objects which are associated with that look object.

The apparatus may further comprise means, such as a screen (for example a computer screen or a television screen) for displaying the graphical object.

In one embodiment, the apparatus is a receiver/decoder, such as a digital or analogue television receiver/decoder.

In a further aspect, the invention provides an object in a graphical user interface, comprising an instance of a widget class which controls operation of the object, and an instance of a look object class which controls the appearance of the object.

The invention also provides a widget set for creating objects as described above, the widget set comprising a plurality of widget classes and one or more look object classes. Most typically, the widget set comprises a plurality of look object classes including a base class and a class derived from the base class.

In order to amend the appearance of the object, the look object class can be changed. This does not change the function of the object since function is controlled by the widget class. Moreover, it is possible for one instance of the look object class to be used by many instances of the widget class, thereby minimising the amount of memory used.

The look object class can be contained in a library linked into an application at run time. A user can therefore select a preferred look for the object by selecting which one of a range of libraries should be linked. Because the look object class is changed independently of the other items, re-coding is simplified to the minimum necessary to implement the new look.

Alternatively, the look object class can be contained in a library linked into an application at compile time. This allows an application developer to have full control of the appearance of the object.

The look object class may export drawing methods that can be invoked to draw part of a component on a GUI display. The widget class typically contains code which invokes drawing methods of the look object class. The look object class may also export properties which provide data relating to elements of a component.

The look object class may be a default class which provides a default look for widgets in a GUI display. Alternatively, the look object class may be a class derived from a default class, the derived class overriding one or more methods and/or properties of the default class. By this arrangement, a user or a developer can make changes to just a limited number of elements within the look of a GUI without having to re-work any parts which are to remain unchanged.

The look object class instance may be a property of the widget class instance. Typically, a pointer to an instance of the look object class is assigned to a property of the widget class instance. Such a pointer may be passed as an argument to a constructor of the widget class.

The invention also provides a method of creating an object in a graphical user interface in which a look object class is instantiated in which is defined properties and/or methods which control the look object of the object; and a widget class is instantiated which is defined properties and/or methods which control operation of the object.

In a method according to the last-preceding paragraph, a pointer to the look object class is typically stored in instance memory of the widget class instance.

By controlling operation, it is not necessarily meant that the object is functional; whereas sliders and buttons and the like may be capable of performing actions, some graphical objects may simply be decorative, such as symbols or parts of composite objects. Thus the properties and/or methods which control operation of the object may do little more than determine the basic function of the object (for example to appear as a pointer), with the precise appearance being controlled by the look object.

In another aspect, the invention provides a method of creating a plurality of objects in a graphical user interface in which a look object class is instantiated in which look object class is defined properties and/or methods which control the look of the objects; and a widget class is instantiated a plurality of times in which is defined properties and/or methods which control operation of the object.

In another aspect, the invention provides a method of implementing a graphical user interface display for an application execution device (for example, a computer, a receiver/decoder for a digital television signal, or another device) comprising loading a widget set as described above into memory of the appliance, creating a plurality of objects in the graphical user interface by a method as described above, and displaying the objects on the display.

In such a method applied to a receiver/decoder, the widget set may be loaded into memory of the receiver/decoder by being downloaded in a channel within a digital television signal.

In another aspect, the invention provides a method of updating the appearance of a graphical user interface display for an application execution device, which display includes a widget set as described above, in which at least one look object class is replaced by another look object class.

In another aspect, the invention provides a method of updating the appearance of a graphical user interface display of a receiver/decoder for a digital television signal, which display includes a widget set as described above stored in memory of the receiver/decoder in which at least one replacement look object class is transmitted to the receiver/decoder in a channel being part of a digital television signal to replace a stored look object class.

The invention extends to corresponding apparatus. In particular, the invention extends to a receiver/decoder arranged to perform a method of any preceding aspect.

In another aspect, the invention provides an application execution device (for example, a computer, a receiver/decoder for a digital television signal, or another device) for implementing a graphical user interface, comprising a processor, memory, and an output port for outputting a signal to a display, the memory having stored therein a program for carrying out any of the methods described above, or any of the objects described above, or any of the widget sets described above.

In any of the above cases, the look object or look object class preferably defines how at least one of the following properties (if present) of a graphical object are displayed:-
the background appearance, for example a background colour;
a background overlay, for example a logo;
the foreground appearance;
a foreground overlay, for example a logo;
the appearance of relief or shading;
the appearance of an object border;
the display of any focus assigned to the object;
the display of any highlighting assigned to the object.

The invention also extends to a computer program for carrying out any of the above methods, and to a computer readable medium having stored thereon a program for carrying out any of the above methods. The invention also extends to an application for a receiver/decoder arranged to perform a method of any preceding aspect. The invention also extends to a method or apparatus substantially as described herein with reference to the accompanying drawings.

Features of one aspect may be applied to any other aspect; method features may be applied to apparatus aspects and *vice versa.*

Preferred features of the present invention will now be described, purely by way of example, with reference to the accompanying drawings, in which:-
Figure 1 shows an overview of a typical digital television system;
Figure 2 is a block diagram of a receiver/decoder;
Figure 3 shows the architecture of a receiver/decoder;
Figure 4 is a diagram of part of the hierarchy of widgets within a widget set;
Figure 5 is a simplified diagram of a widget appearing on a GUI display; and
Figure 6 illustrates the location in memory of several widgets.

### Overview of a digital television system

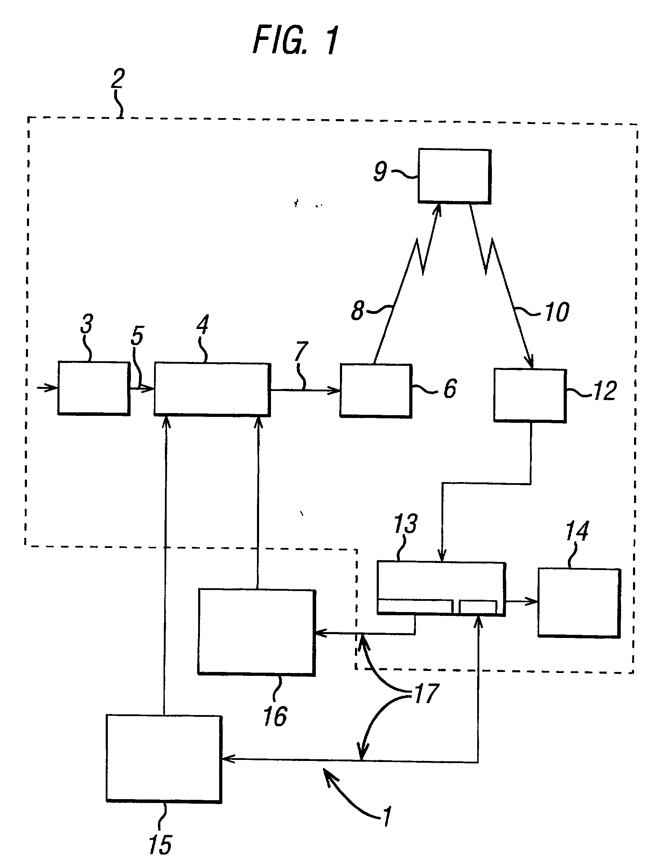

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the receiver/decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the receiver/decoder 13 and smartcard, the end user may purchase commercial offers in either a subscription mode or a pay-per-view mode.

An interactive system 16, also connected to the multiplexer 4 and the receiver/decoder 13 and again located partly in the broadcast centre and partly in the receiver/decoder, enables the end user to interact with various applications via a modemmed back channel 17. The modemmed back channel may also be used for communications used in the conditional access system 15.

### Receiver/decoder

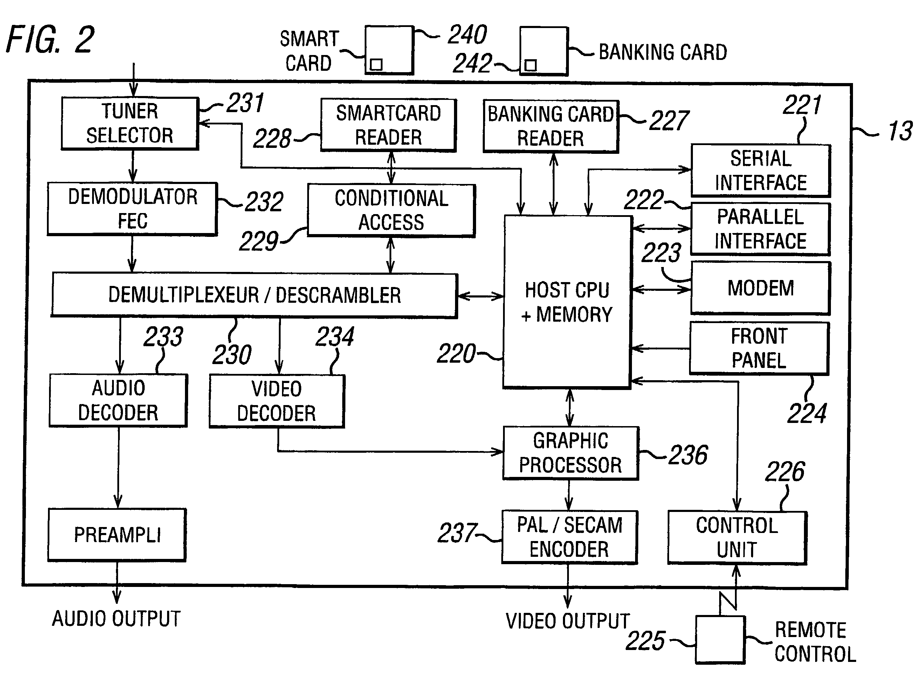

Referring to Figure 2, the various elements of receiver/decoder 13 will now be described in terms of functional blocks.

The receiver/decoder 13, which may be, for example, a digital set-top box (DSTB), comprises a central processor 220 including associated memory elements and adapted to receive input data from a serial interface 221, a parallel interface 222, a modem 223 (connected to the modem back channel 17 of Fig. 1), and switch contacts 224 on the front panel of the decoder.

The receiver/decoder is additionally adapted to receive inputs from an infra-red remote control 225 via a control unit 226 and also possesses two smartcard readers 227, 228 adapted to read bank and subscription smartcards 242,240 respectively. The subscription smartcard reader 228 engages with an inserted subscription card 240 and with a conditional access unit 229 to supply the necessary control word to a demultiplexer/descrambler 230 to enable the encrypted broadcast signal to be descrambled. The decoder also includes a conventional tuner 231 and demodulator 232 to receive and demodulate the satellite transmission before being filtered and demultiplexed by the unit 230.

As used in this description, an application is preferably a piece of computer code for controlling high level functions of preferably the receiver/decoder 13. For example, when the end user positions the focus of remote control 225 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

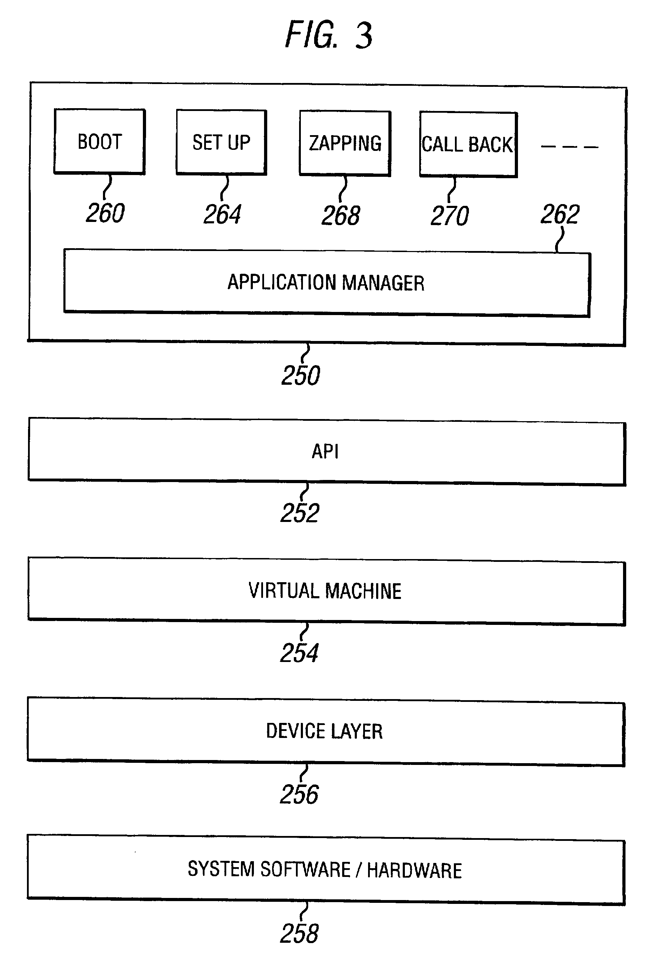

The receiver/decoder contains five software layers, organized so that the software can be implemented in any receiver/decoder and with any operating system. Referring to Figure 3, the various software layers are Application Layer 250, Application Programming Interface (API) layer 252, Virtual Machine Layer 254, Device Layer 256 and System Software/Hardware Layer 258.

The Application Layer 250 encompasses applications that are either resident in or downloaded to the receiver/decoder. They may be interactive applications used by customers, written in, for example, Java, HTML, MHEG-5 or other languages, or they may be applications used by the receiver/decoder to run such applications. This layer is based on a set of open Application Programming Interfaces (APIs) provided by the Virtual Machine layer. This system allows applications to be downloaded to flash or RAM memory in the receiver/decoder on-the-fly or on demand. The application code can be transmitted in compressed or uncompressed format using protocols such as Data Storage Media Command and Control (DSMCC), Network File Server (NFS) or other protocols.

Interactive applications are applications that the user interacts with, for example, to obtain products and services, such as electronic program guides, telebanking applications and games. The following resident applications are used to manage interactive applications:
- Boot. The Boot application 260 is the first application launched when the receiver/decoder is powered on. The Boot application starts the different "Managers" in the Virtual Machine, the first being the Application Manager 262.
- Application Manager. The Application Manager 262 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 264 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 268 is used to change channels using the Program-up, Program-down and numeric keys. When another form of zapping is used, for example, through a banner (pilot) application, the Zapping application is stopped.
- Callback. The Callback application is used to extract the values of various parameters stored in the receiver/decoder memory and return these values to the commercial operator via modemmed back channel 17, or by other means.

The API layer 252 provides high-level utilities for interactive application development. It includes several packages that make up this high-level API. The packages provide all the functionality necessary to run interactive applications. The packages are accessible by the applications.

In a preferred embodiment the API is adapted to run applications written in the Java programming language. Furthermore, it can interpret HTML and other formats, such as MHEG-5. Besides these interpreters, it also includes other packages and service modules that are detachable and extensible as requirements dictate.

The Virtual Machine layer 254 is composed of language interpreters and various modules and systems. It consists of everything necessary to receive and execute interactive applications in the receiver/decoder.

The Device Interface layer 256 includes a Device Manager and devices. Devices are software modules which consist of the logical resources necessary for management of external events and physical interfaces. The Device Layer manages communication channels between drivers and applications and provides enhanced error exception checking. Some examples of managed devices are: card readers, modems, network, PCMCIA (Personal Computer Memory Card International Association), LED display and so on. Programmers do not have to deal with this layer directly, since the API layer controls the devices from above.

The System Software/Hardware layer 258 is provided by the manufacturer of the receiver/decoder. Because of the modularity of the system and because services supplied by the OS (such as event scheduling and memory management) are part of the Virtual Machine, the higher layers are not tied to a particular real-time operating system (RTOS) or to a particular processor.

### Widget sets

In a preferred embodiment, a widget set is provided for use in applications to run in a graphical user interface (GUI). One particular application of such a widget set is to provide widgets in a GUI display of a receiver/decoder for digital television. Each widget is implemented as an object-oriented module such that, for each widget, there is a corresponding widget class. Thus, any widget may be built up from simpler component widgets by inheriting or aggregating classes of other widgets.

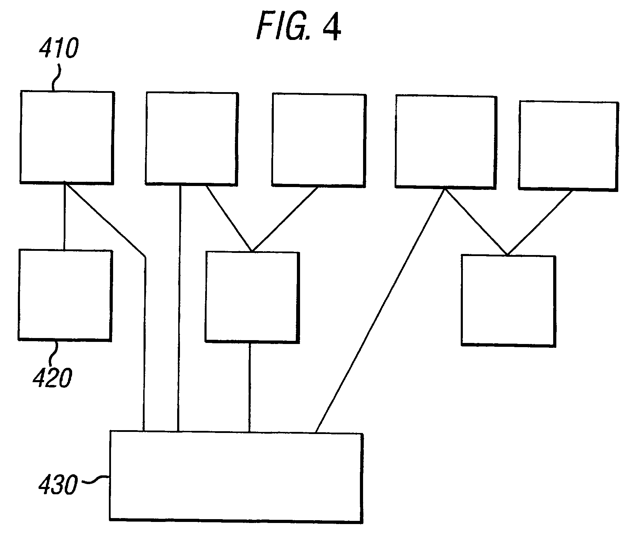

Figure 4 is a simplified diagram of the hierarchy of widgets within a widget set. In this embodiment, the widget set contains a set of primitive widget classes 410 including, amongst others, widow and dialogue box frames, a slider control, a push button, a check box, a text field, and a text editing box. At a next level of complexity, there are classes 420 which combine several primitive widget classes or modify the behaviour of a primitive widget. For example, a widget such as a list box may create editable list items from a text editing box class and allow a user to scroll through the list using a scroll bar derived from a slider control class. At yet a higher level of complexity, the widget set contains aggregate widgets 430 such as a file selection dialogue box which contains push buttons, scrollable lists, text fields and text editing boxes, all of which are defined in other classes of the widget set.

Each of the widget classes implements methods and event handlers to control operation of the widget. The widget classes may also contain methods for drawing some parts of the widget. However, in order to provide a particular appearance or "look" for the widget, the widget classes invoke drawing methods of a look object class with which the widget class is associated. This will be described in further detail below.

### Look class public methods and API

In order that the look object classes and widget classes can interact, it is necessary for the look object classes to have a consistent set of public methods that are guaranteed to be available for use by the widget class. In particular, the look object class must provide a standard API, which contains methods that the widget class can invoke in order to draw itself on a GUI display.

The API used by widgets is defined in a base class, from which all looks are derived. The API comprises the following elements:
1. General display methods
2. Particular display methods
3. Control of the creation and destructions of instances
4. Control of borders
5. Control of modifications

General display methods are those which are available to all widgets while particular display methods are particular to certain types of widget.

Looks are constructed using a hierarchical architecture. A new look class is created by inheriting the attributes, methods and default values of the class from which it is derived, and then adding new attributes, methods and default values, or overriding some or all of those inherited.

A look class is organised as a table containing pointers to public methods. A look class which is derived from another look class may therefore redefine a method by changing the relevant pointer so that it points to another method. Typically, a look class only implements some of the available public methods.

In one implementation, public methods, known as dummy methods, are provided, which do nothing other than return the call. If a method not implemented by the look class is called by the widget, a dummy method is called. This is done in order to ensure error free functioning of method calls even when the method is in fact not implemented. A disadvantage of calling dummy methods is that time may be wasted in calling a method which does nothing.

In another implementation, look classes are provided with validation masks. A validation mask defines which methods can be called by the look class, so that methods which are not implemented are not called. A widget can access the validation mask of a look class to optimise the drawing of the widget. In this case, the widget is aware of methods which are not implemented, so the widget will avoid generating calls to such methods. In this way, it is possible to prevent time from being wasted in calling dummy methods.

A look class may be derived from two or more other classes (multi-heritage). This can enable a look class to be created that is an union of two or more other looks. As mentioned above, when a look class is created, it adopts the attributes, methods and default values of the look class from which it is derived. In order to implement multi-heritage, the look also contains one or more pointers to the additional classes from which it derives attributes, methods and default values. The look can then access those attributes, methods and default values, without having to copy or create them itself.

In another embodiment, when a look class is created, it adopts the attributes, methods and default values of all of the look classes from which it is derived.

The principle of multi-heritage is also useful in situations where non-standard widgets are designed, which may require the look to implement non-standard methods. A pointer in the look can point to a second look class which contains the non-standard methods that are required to display the widget.

It is important to ensure that the various look classes from which a look is derived do not conflict with each other. This can be done by ensuring that the additional look classes only contain methods which are not in the main look class from which the look is derived, or by giving an order of precedence to the various classes.

An example of the public methods of a look object class is set forth below.

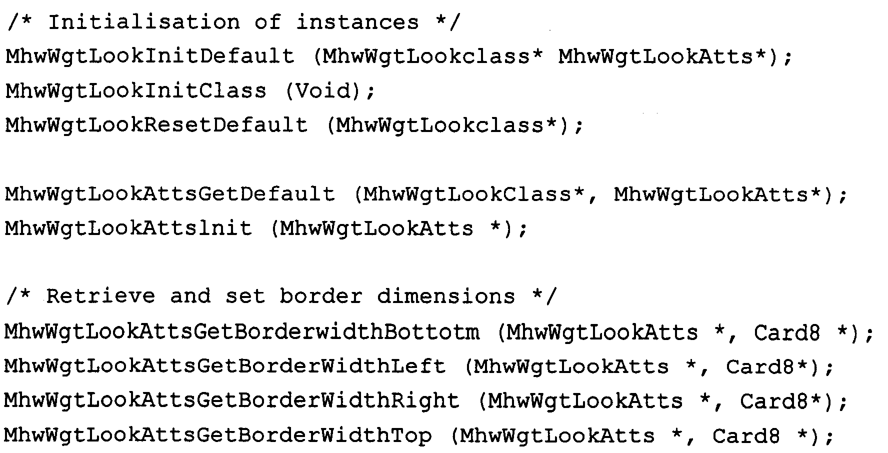

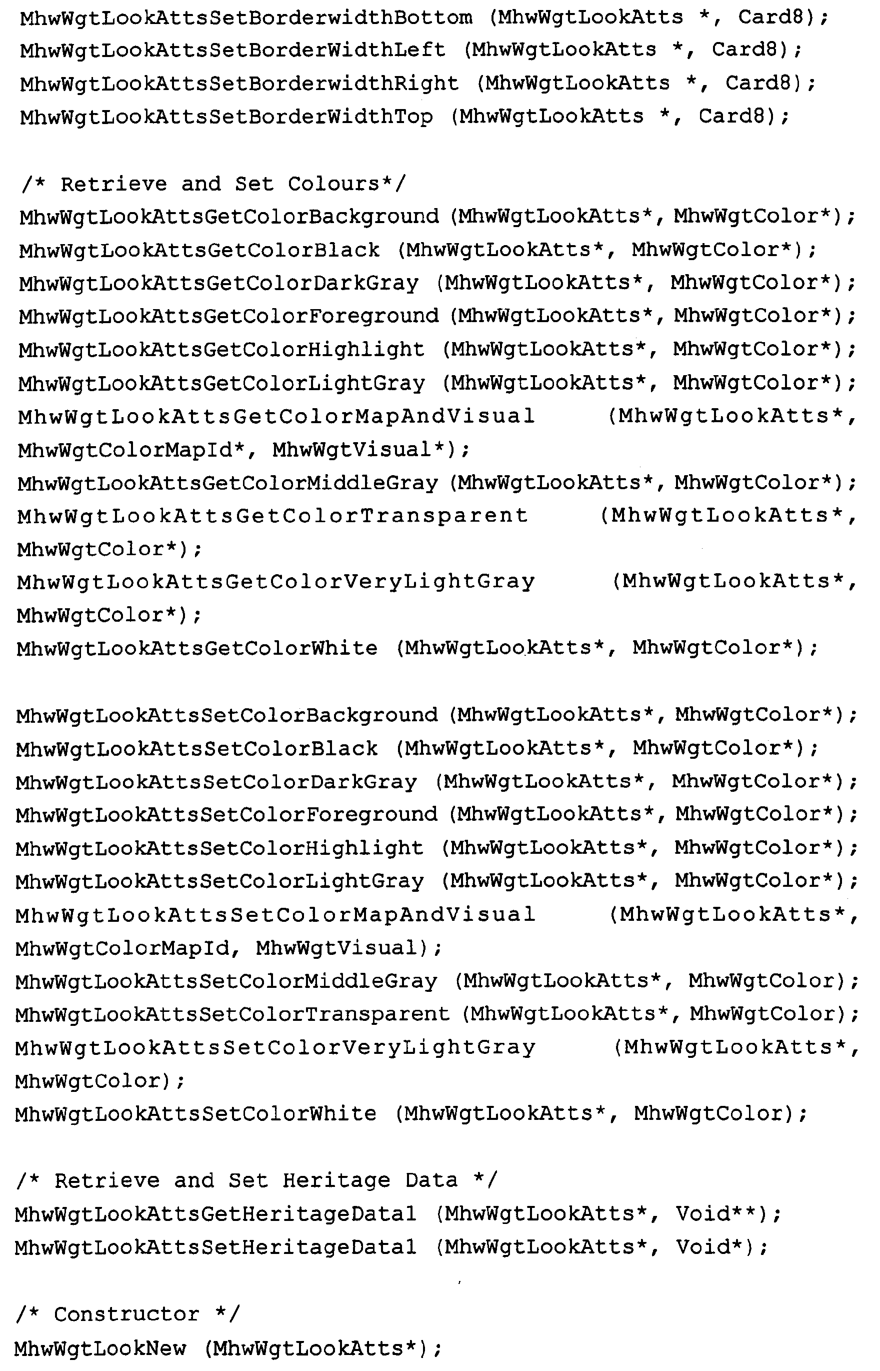

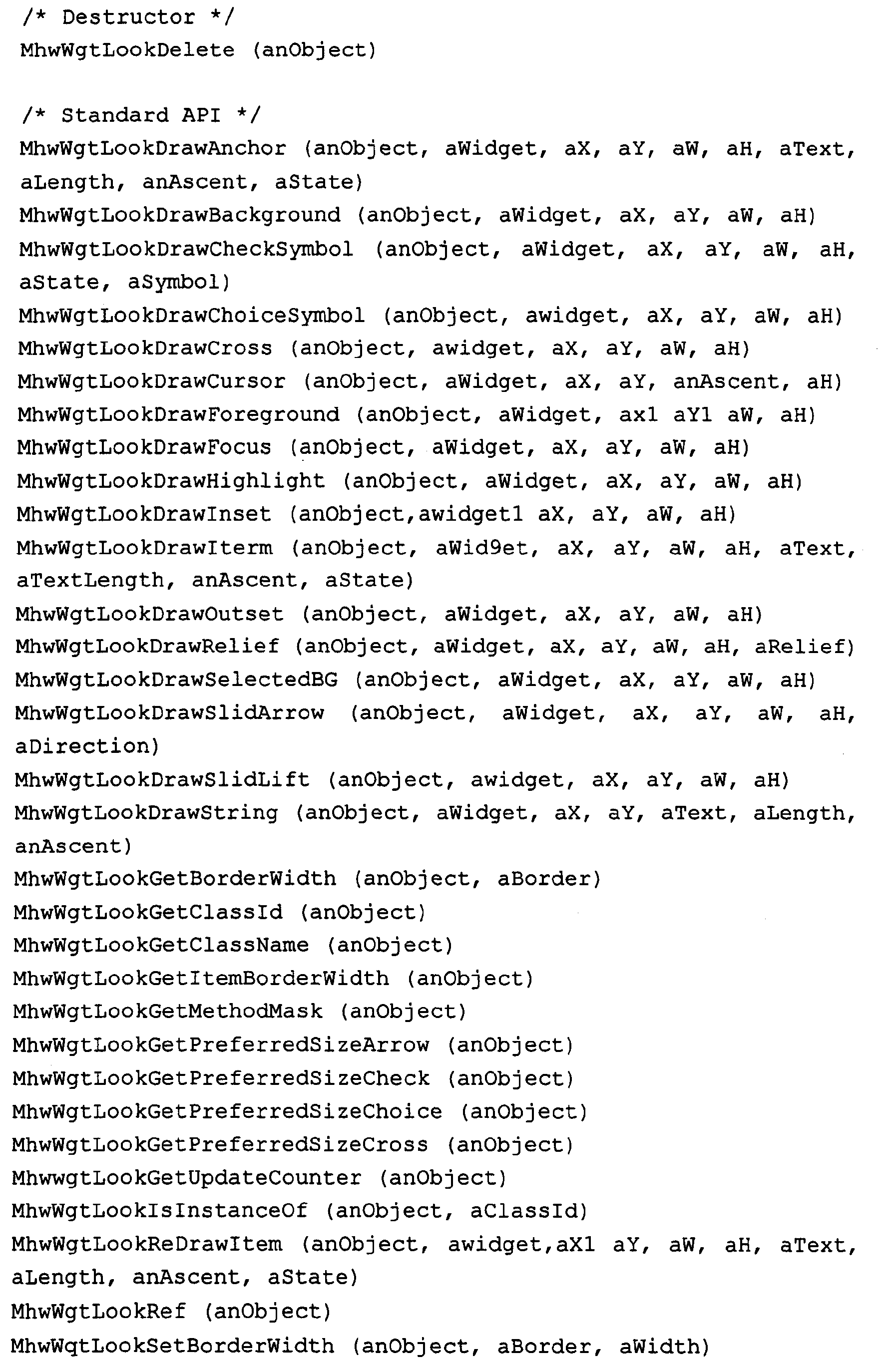

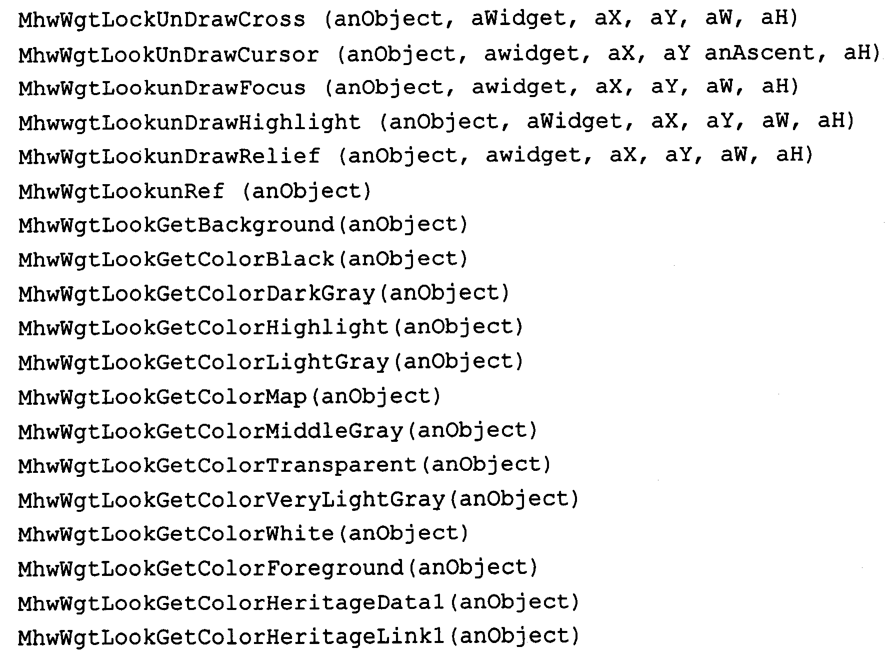

### Creating and displaying a widget

When an application requires a widget to appear on the display of a GUI, the first task it must perform is to construct an instance of the widget class. During creation of the widget instance, a look class instance becomes associated with the widget class instance. The particular look is chosen as follows:
1. If a look class instance is passed by the application to the constructor, then use it.
2. Otherwise, use the default look specified for the class of widget being created, if there is one.
3. Otherwise, use the default look specified for the widget context, if there is one.
4. Otherwise, use the default look for the widget set.

Once the widget class has been instantiated, the application can invoke an appropriate one of its public methods to display it.

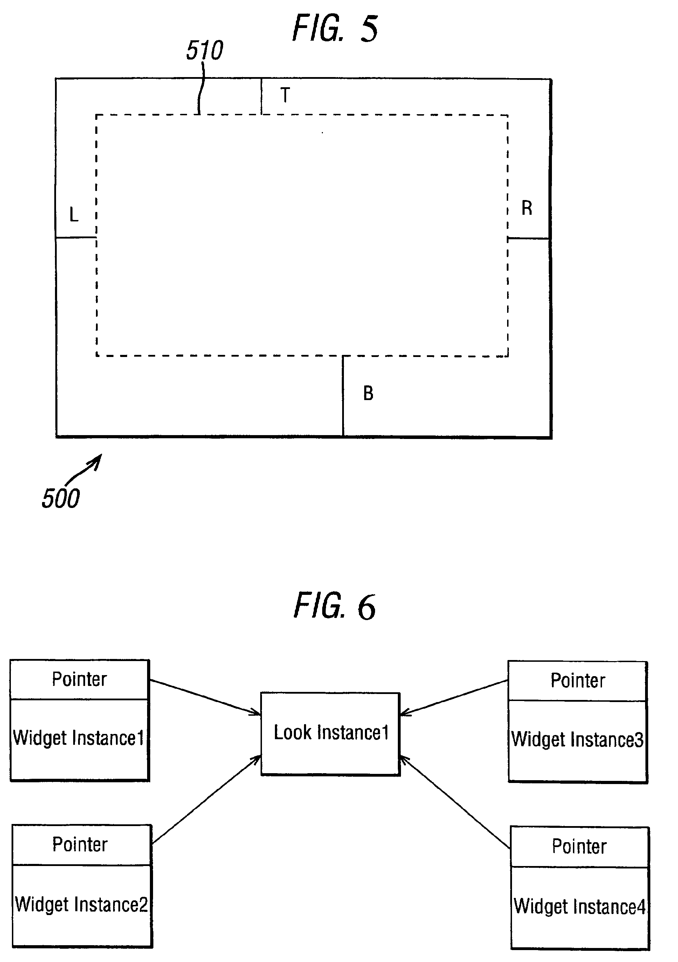

The widget class also preferably provides a public method that can be called with a pointer to a look class instance, and that look class instance then becomes associated with the widget class instance. This causes the appearance of the widget to change in accordance with the newly associated look class instance. It should be understood that "association" is, in reality, nothing more than setting the value of a field within the widget class instance. To associate the widget with a different look class can, in the simplest of embodiments, be done simply by making an assignment to the field. (However, see the comments below relating to memory management and the method MhwWgtXxxSetLook.) Moreover, many widget class instances may be associated with one look class instance. This is illustrated diagrammatically in Figure 6.

When a widget class method is called to draw the widget on a GUI display, it builds the image of the widget in the following order:
1. The background of the widget (for example, a background colour or an image).
2. Background overlay (for example, a logo)
3. Foreground of the widget
4. Foreground overlay (for example, a logo)
5. The widget border.
6. Highlighting
7. Input focus.

For a given widget, certain parts may be absent. The presence or absence of a part of the widget depends on the following criteria.
1. Hard coding. Some of the parts are not defined for certain classes of widget.
2. Optional parts. For example, the focus, the relief and the highlight may be inhibited at will by means of a public attribute of the widget.
3. Definition of the look. A look can omit one or more of the parts.

In a typical example, the following steps are carried out.

Firstly the background of the widget is drawn by the widget class method itself, for example, by painting a background colour, a background pattern or an image. The background overlay is then drawn by invoking the public method of the associated look instance MhwWgtLookDrawBackground specifying appropriate arguments for the height, width and position of the widget on the display. The appearance of the background is thus modified by the look, for example, by overlaying a logo.

The widget class method must then build up the foreground of the widget; that is to say, it creates the visual objects that actually are manipulated by a user or display information when the widget is in use. For example, the widget might implement a check box, in which case it invokes the look class method MhwWgtLookDrawCheckSymbol. The look may then modify the foreground, for example by overlaying a logo.

The border region of the widget is then drawn, as will be described below.

If the widget class determines that one of the objects within the widget has input focus, it invokes the look class method MhwWgtLookDrawFocus to indicate this in the displayed widget. Similarly, if part of the widget is to be highlighted, the widget class invokes the look class method MhwWgtLookDrawHighlight.

### Widget border management

One specific example of the way in which the look controls the appearance of the widget on a GUI display is in the management of borders. The appearance of a widget with borders in its most general form on a GUI display is shown in Figure 5. The widget 500 occupies a rectangular area in the display of a GUI. The area occupied by the widget includes two regions: an inner operative region 510 surrounded by a border region.

The border region typically does not contribute to the function of the widget (although it may, in some cases, by used by a user to move and/or re-size the widget). Therefore, there is considerable scope for variation of the appearance of the border region in accordance with a user's wishes. For example, the colour, width, background pattern can all be selected to appeal to a user or to provide a consistent appearance. Therefore, responsibility for drawing the border is given to the look class.

The look maintains four dimensions to specify the width of the border. These specify the distance from the left, right, top and bottom of the operative region 510 to the edge of the widget. These dimensions are indicated respectively at L, R, T, and B in Figure 4. Values for these dimensions are specified in the default look. An application may define a class derived from the default look class in which the values are overridden to create a look that creates a widget with a border of non-standard width. An application (for example, a look manager) can also change the values at run time by invoking the look methods MhwWgtLookAttsSetBorderwidthBottom, MhwWgtLookAttsSetBorderWidthLeft, MhwWgtLookAttsSetBorderwidthRight, or MhwWgtLookAttaSetBorderWidthTop.

Within the look class there is code that controls the detailed layout of a border according to values passed to the look class by the widget class.

### Widget colour management

A look also includes a definition of colours, so that any widget instance which is associated with a particular look instance will use the colours defined in that look instance. In one embodiment, a look defines the following colours:
- black
- dark gray
- middle gray
- light gray
- very light gray
- white
- transparent
- highlight colour

The colour definitions in the look are used when drawing a widget. For example, if a black line is to be drawn when displaying a widget, the colour which has been defined as "black" will be used. For example, if the look is to have a red hue, then "black" may be defined to be dark red, and "white" may be defined to be light pink, with various shades of red being defined in between. In this example, a drawing operation which would normally draw a black line will instead draw a dark red line, and so on.

In addition, the look defines a colour map which sets the actual colour values which are to be used when displaying any particular colour on the display of a GUI.

### Creating a modified widget

Suppose that the default look method MhwWgtLookDrawCheckSymbol draws a rectangular box which is either empty or which contains a small tick symbol depending on its state, and that this defines the look of a normal check box in a GUI. Now suppose that another widget is required in which either a tick or a cross is displayed. The appearance is entirely controlled by the look class, so only the look class need be altered. Moreover, a new look class to implement this behaviour can be derived from the existing look class, and provide only one method MhwWgtLookDrawCheckSymbol to override the method of the same name in the base look class. Moreover, when the method MhwWgtLookDrawCheckSymbol is invoked with the argument aState set to true, the method MhwWgtLookDrawCheckSymbol of the base class can be called to draw a tick. New code need be written only to handle the case where a cross is to be drawn. Thus, a new widget can be created with a minimum of programming effort.

It should be understood that this procedure does not alter the appearance of the original check box widget; this widget uses the base look class which has not been amended. In order to effect a change to the appearance of the original check box widgets in an application, the method MhwWgtLookDrawCheckSymbol in the base look class must be amended. All check box widgets derived from that class will then change their appearance following the next occasion (at compile time, or run time, as the case may be) upon which the look class is linked with the application.

The widget class will, in principle, co-operate to create a widget with any class having an appropriate set of public methods and properties as a look class. However, there is advantage in deriving all look classes from as small as possible a number of common base classes, and ideally just one base class. Those familiar with object-oriented prong will understand that this minimises the use of memory and other resources by the look classes. A derived class has a pointer to its base class so that it can access method code and static data of the base class without duplication of such code or data in memory.

### Version Control

It may be that some widget instances have a very long life. For example, the root window of a window manager, a taskbar widget in a workstation display, and so forth. In such cases, there is a strong possibility that the look classes might be updated during the life of the widget. The widget class must be caused to re-draw itself when this happens.

One a way to achieve this is to give each look class an update counter which is exported as a public property or is accessible though a public method. When a widget class is instantiated, the widget class instance queries the update counter of the associated look, and stores the value of the update counter in memory local to the widget class instance. If the instance of the look class is subsequently updated, the widget class instance can detect this change by comparing the value that is stored in its local memory with the value of the update counter in the look class instance. If the look class instance has been updated, the widget can then re-draw itself using the methods of the look class.

### Construction and Destruction of Look Class Instances

In general, there will be fewer instances of each look class than of each widget class. In some cases, there may be just one instance of a look base class referred to by all widget class instances in an application. There may also be instances of derived look classes referred to by some of the widget class instances of an application. However, a widget class cannot assume that there will always be a look class instance in existence at the time that the widget class is being instantiated; the widget instance might be the first to require association with a particular look class.

Therefore, it is proposed that during instantiation of each widget class, the widget class constructor invokes the associated look class constructor MhwWgtLookNew. If no instance of the look class exists, then a new instance is created. A value of 1 is then stored in a reference counter held in the local memory of the look class instance. If an instance of the look class already exists, the look class constructor returns a pointer to it, and increments the reference counter.

During destruction of each widget class instance, the destructor of the widget class invokes the destructor MhwWgtLookDelete for the associated look class instance. The destructor MhwWgtLookDelete decrements the reference counter. If the counter remains greater than zero, the destructor simply returns. However, if the destructor reaches zero, then no widget class instances (other that the one undergoing destruction) are associated with that look class instance, in which case the look class destructor proceeds to remove the look class instance from memory.

The widget class method MhwWgtXxxSetLook can be called to change the look with which a particular widget class instance is associated. Within this method, a call is first made to the destructor of the outgoing look class instance, and a call is then made to the reference function of the new look class to obtain a pointer to a class instance. This ensures that the reference counters of the look classes are properly updated.

There must also provision for a new instance of a look class to be created even if an instance already exists. This allows an application to have more than one instance of any given look class, and to set different attributes in the different instances. For example, there may be two instances of the same look class identical in all respects other than one has all attributes remaining in accordance with their defaults, and the other having different values assigned to one or more of its attributes (border width, colour, and so forth).

### Look Managers

As will be understood, the system of look classes and instances allows very detailed control over the overall look of an application. For instance, just one attribute of any look class can be changed to effect a minor change to the look of an application. Accordingly, a look manager application may be provided to enable a user to alter these attributes as required. Such an application typically includes a GUI display including widgets embodying the invention in order that the user can immediately see the effect of changing the attributes of the look upon the appearance of the widget.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of controlling the appearance of a graphical object in a graphical user interface, comprising
defining a look object; and
associating the look object with the graphical object.

2. A method according to claim 1 wherein the look object includes code or parameters determining how the graphical object is displayed.

3. A method according to claim 1 or 2 wherein the look object is defined by object-oriented program code.

4. A method according to any of the preceding claims, wherein the look object is defined by instantiating a look object class.

5. A method according to claim 4 wherein the look object contains a pointer to another look object class.

6. A method according to any of the preceding claims wherein the graphical object includes an attribute identifying the look object associated with the graphical object.

7. A method according to any of the preceding claims further comprising modifying the appearance of the graphical object by re-defining or modifying the look object or by associating a different look object with the graphical object.

8. A method according to any of the preceding claims wherein the look object includes an update counter whose value is updated when the look object is re-defined or modified.

9. A method according to any of the preceding claims wherein the look object includes a validation mask which indicates methods that can be called by the look object.

10. A method according to any of the preceding claims, being a method of controlling the appearance of a plurality of graphical objects in a graphical user interface, comprising associating the look object with the plurality of graphical objects.

11. A method according to any of the preceding claims wherein the look object includes a counter which indicates the number of graphical objects which are associated with that look object.

12. A method of defining a graphical object in a graphical user interface comprising:
providing a look object which controls the appearance of the graphical object; and
providing a widget object which controls operation of the graphical object.

13. A method according to any of the preceding claims further comprising displaying the graphical object.

14. A method according to any of the preceding claims, wherein the method is carried out by a receiver/decoder.

15. Apparatus for controlling the appearance of a graphical object in a graphical user interface, comprising
means for defining a look object; and
means for associating the look object with the graphical object.

16. An object in a graphical user interface comprising:
an instance of a widget class which controls operation of the object; and
an instance of a look object class which controls the appearance of the object.

17. A widget set for creating objects according to claim 16, the widget set comprising a plurality of widget classes and one or more look object classes.

18. An application execution device for implementing a graphical user interface, comprising a processor, memory, and an output port for outputting a signal to a display, the memory having stored therein a program for carrying out the method of any of claims 1 to 13, or an object according to claim 15, or a widget set according to claim 16.

19. A method, apparatus, device, object or widget set according to any preceding claim, wherein the look object or look object class defines how at least one of the following properties (if present) of a graphical object is displayed:-
the background appearance;
a background overlay;
the foreground appearance;
a foreground overlay;
the appearance of relief or shading;
the appearance of an object border;
the display of any focus assigned to the object;
the display of any highlighting assigned to the object.
